# EUROPÄISCHE PATENTANMELDUNG

(11) **EP 0 553 616 A1**
(43) Veröffentlichungstag der Anmeldung: **04.08.1993**
(21) Anmeldenummer: 93100174.7
(22) Anmeldetag: 08.01.1993
(51) Int. Cl.: B60S 1/24

(54) **Vorrichtung zum Wischen von Scheiben an Kraftfahrzeugen**

(30) Priorität: 29.01.1992 DE 4202421
(71) Anmelder: ROBERT BOSCH GMBH, 70442 Stuttgart (DE)
(72) Erfinder: Kühbauch, Gerd, Dipl.-Ing. (FH), W-7582 Bühlertal (DE)

(57) **Zusammenfassung**

Die Erfindung betrifft eine Vorrichtung zum Wischen von Scheiben an Kraftfahrzeugen, mit einem auf einer pendelnd angetriebenen Welle (34) sitzenden Wischhebel (54), dessen Wischblatt (58) mit einem Wischelement an der Scheibe angelegt ist, einem mit der Welle (34) fest verbundenen Getriebeteil (32) eines Gestänge-Pendelgetriebes, an dem mit Abstand voneinander die einen Enden von langgestreckten, sich ineinander benachbarten Ebenen kreuzenden Lenkern (30,36) angelenkt sind, deren anderen Enden gelenkig mit einem Endbereich einer Schubstange (20) verbunden sind, welche mit ihren anderen Ende mit einer umlaufenden Kurbel (14) gelenkig verbunden ist. Eine besonders einfache an die verschiedenen Gegebenheiten leicht anpaßbarere Blockiersicherung wird bei einer solchen Wischvorrichtung erreicht, wenn zumindest eines der Lenkergelenke (25,31,37,39) mittels Federkraft an einem Anschlag (44,46) des mit diesem Lenker (30,36) verbundenen Getriebeteils (32,20) so angelegt ist, daß es bei einer das Wischfeld (64) einengenden Hemmung des Wischhebels (54) gegen die Federkraft auszuweichen vermag.

## Beschreibung

### Stand der Technik

Die Erfindung geht aus von einer Wischvorrichtung nach der Gattung des Hauptanspruchs. Es ist schon eine Wischvorrichtung bekannt (DE-OS 24 30 831), bei der insbesondere bei starkem Schneefall durch den an den Rand des Wischfeldes geschobenen Schnee eine stetige Verkleinerung des Wischfeldes eintritt, bis die Wischvorrichtung blockiert. Dies führt zum vorzeitigen Ausschlagen der Gelenke des Pendelgetriebes, zur Deformation von Gestängeteilen des Pendelgetriebes und gelegentlich auch zur Zerstörung eines zu einem Antriebsaggregat für die Wischvorrichtung gehörenden Elektromotors.

### Vorteile der Erfindung

Die erfindungsgemäße Wischvorrichtung mit den kennzeichnenden Merkmalen des Hauptanspruchs hat demgegenüber den Vorteil, daß bei einer Verkleinerung des Wischfeldes die angeführten, schädlichen Folgen vermieden werden, weil nur das Wischblatt vorübergehende blockiert wird, alle in Kraftflußrichtung vor der Wischerwelle liegenden Vorrichtungsteile in ihrem Bewegungsablauf nicht beeinträchtigt werden, weil dann die dem Wischblatt zugedachte Bewegung von einem anderen Vorrichtungs- oder Gelenkteil ausgeführt wird.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

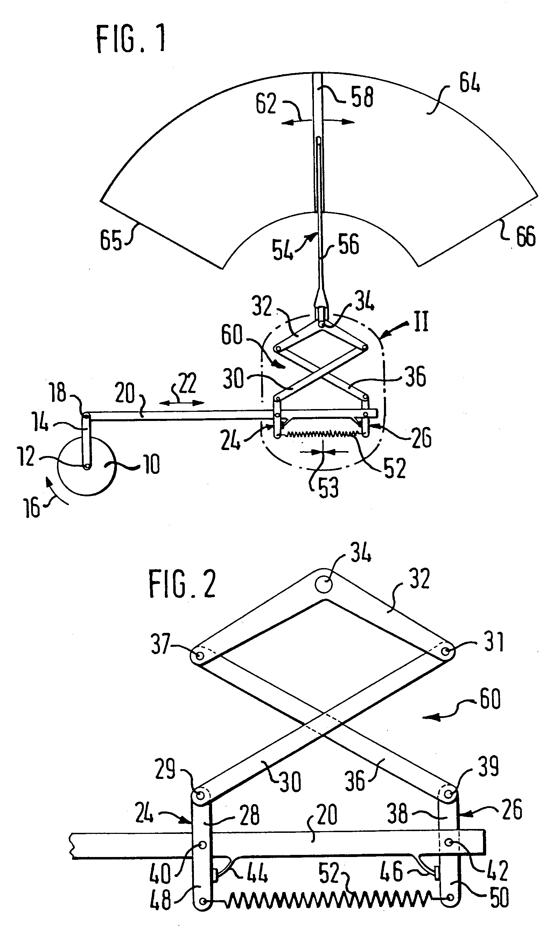

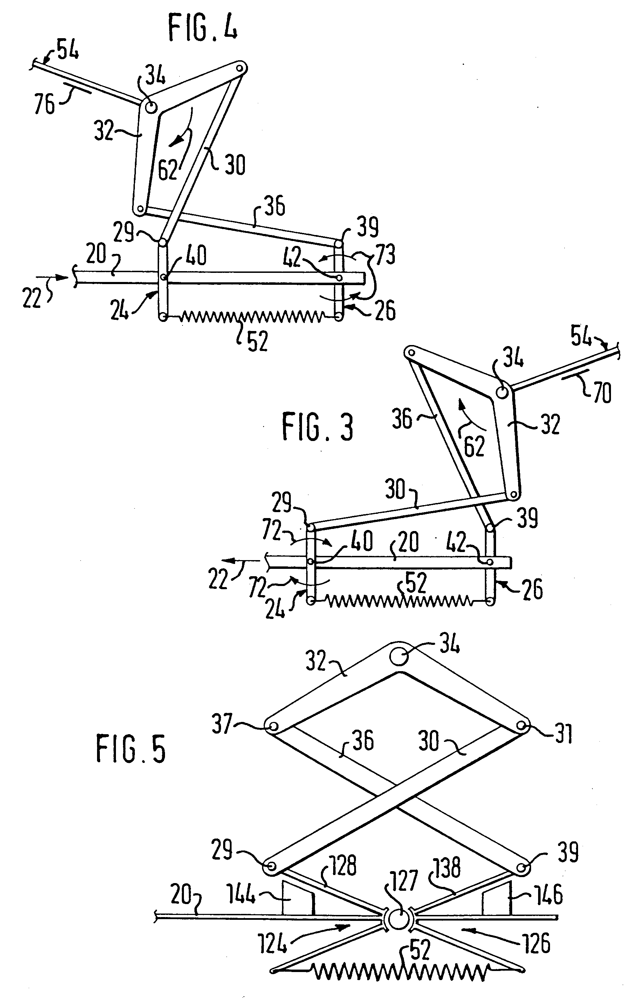

Ausführungsbeispiele der Erfindung sind in der Zeichnung dargestellt und in der nachfolgenden Beschreibung näher erläutert. Es zeigen Figur 1 eine schematische Prinzip-Darstellung einer ersten Ausführungsform der erfindungsgemäßen Wischvorrichtung, Figur 2 eine in Figur 1 mit II bezeichnete Einzelheit der Wischvorrichtung, in vergrößerter Darstellung, wobei sich deren Wischhebel in einer Mittelstellung befindet, Figur 3 die Anordnung gemäß Figur 2, wobei sich der Wischhebel in der einen Pendel-Umkehrlage befindet, in verkleinerter Darstellung, Figur 4 die Anordnung gemäß Figur 3, mit in der anderen Pendel-Umkehrlage befindlichem Wischhebel und Figur 5 eine andere Ausführungsform der in Figur 2 dargestellten Anordnung.

Eine in Figur 1 dargestellte Wischvorrichtung weist einen elektrischen Antriebsmotor 10 auf, an dessen Abtriebswelle 12 eine Kurbel 14 drehfest angeordnet ist, die in Richtung des Pfeiles 16 angetrieben umläuft. An dem freien Ende der Kurbel 14 ist über ein Gelenk 18 das eine Ende einer Schubstange 20 angelenkt. Die Schubstange 20 führt eine hin und her gehende Bewegung aus (Doppelpfeil 22), wenn die Kurbel 14 umläuft. An dem von der Kurbel 14 abgewandten Ende der Schubstange 20 sind mit Abstand voneinander zwei Schwenkhebel 24 und 26 angelenkt. Die Schwenkhebel 24 und 26 sind als zweiarmige Hebel ausgebildet. An dem einen Hebelarm 28 des Schwenkhebels 24 ist ein langgestreckter Lenker 30 mit seinem einem Ende gelenkig verbunden. Das andere Ende des Lenkers 30 hat eine Gelenkverbindung mit einem bügelartigen Getriebeteil 32, das fest mit einer Wischerwelle 34 verbunden ist. Die Wischerwelle 34 sitzt im Mittelbereich des bügelartigen Getriebeteils 32. Mit dem Bügelteil 32 ist ein zweiter Lenker 36 gelenkig verbunden, der an dem einen Hebelarm 38 des Schwenkhebels 26 gelenkig angreift. Wie die Zeichnung zeigt, kreuzen sich die beiden Lenker 30 und 36 in einander benachbarten Ebenen, so daß sie auch als Kreuzlenker bezeichnet werden können. Die Anordnung der Schwenkhebel 24 und 26 an der Schubstange 20 erfolgt über Gelenke 40 und 42 (Fig. 2). Die Gelenke zwischen den Hebenlarmen 28 und 38 und den Kreuzlenkern 30 und 36 sind mit den Bezugszahlen 29 und 39 versehen worden, während die mit Abstand voneinander liegenden Gelenke zwischen den Kreuzlenkern 30 und 30 und dem Getriebeteil 32 mit den Bezugszahlen 31 und 37 bezeichnet sind. Weiter sind an der Schubstange 20 Anschläge 44 und 46 angeordnet. Diese Anschläge 44 und 46 befinden sich beim Ausführungsbeispiel an den einander zugewandten Seiten der Schwenkhebel 24 und 26 im Bereich der anderen Hebelarme 48 und 50 der Schwenkhebel 24 und 26. An diesen Hebelarmen 48 und 50 greift eine gemeinsame, vorgespannte Zugfeder 52 an, welche die Schwenkhebel in ihrer Betriebsstellung an den Anschlägen 44 und 46 angelegt hält. An der Wischerwelle 34 ist ein Wischhebel 54 befestigt, zu dem ein Wischerarm 56 und ein Wischblatt 58 gehören. Das Wischblatt 58 liegt mit einem Wischelement auf einer zu wischenden Scheibe an.

Wenn der elektrische Antriebsmotor 10 die Kurbel 14 in Richtung des Pfeiles 16 antreibt und die Schubstange in Richtung des Doppelpfeiles 22 bewegt wird, erfolgt über die Kreuzlenkeranordnung 60 eine Übertragung dieser Schubbewegung (Pfeil 22), wobei das Wischelement 58 in Richtung des Doppelpfeiles 62 über die zu wischende Scheibe bewegt wird. Dabei überstreicht das Wischelement ein ringsegmentförmiges Wischfeld 64. Es pendelt dabei zwischen zwei sogenannten Pendelumkehrlagen 64 und 66. Von besonderer Bedeutung ist dabei zunächst, das die Vorspannkraft (Doppelpfeil 53) der Zugfeder 54 so groß ist, daß sie bei allen normalen Betriebsbedingungen die Schwenkhebel 24 und 60 an die ihnen zugeordneten Anschläge 44 und 46 drückt. Bei diesen sogenannten normalen Betriebsbedingungen soll sich die Wischvorrichtung, insbesondere die Kreuzlenkeranordnung 60, so verhalten, wie wenn die schubstangenseitigen Enden der beiden Kreuzlenker 30 und 36 direkt an der Schubstange 20 angelenkt wären.

Diese Anordnung ist insgesamt in Figur 1 dargestellt. Die Figur 2 zeigt die Kreuzlenkeranordnung 60 gemäß Figur 1 in vergrößerter Darstellung. Auch bei dieser Anordnung ist die Betriebsstellung so gezeichnet, wie dies in Figur 1 schon dargestellt worden ist. Wenn sich nun während des Betriebs der Wischvorrichtung bei starkem Schneefall, insbesondere bei Naßschnee, im Bereich der beiden Wischblatt-Pendelumkehrlagen 64 und 66 ein Schneewall aufbaut, der eine stetige Verkleinerung des Wischfeldes 65 bewirkt, arbeitet die Wischvorrichtung wie folgt:
Es wird angenommen, daß gemäß Figur 3 der Wischhebel 54 im Uhrzeigersinn verschoben wird und gegen den mit der Bezugszahl 70 bezeichneten Schneewall läuft. Dabei kann die Wischvorrichtung nicht blockieren, weil trotz festgehaltenem Wischblatt die vollständige Schubbewegung der Schubstange 20 vollzogen werden kann. Dies ist dadurch möglich, daß der Schwenkhebel 24 im Uhrzeigersinn in Richtung der Pfeile 72 gegen die Kraft der Zugfeder 52 gedreht wird. Das Lenkergelenk 29 zwischen dem Lenker 30 und dem Schwenkhebel 24 ist also gegen die Kraft der Feder 52 ausweichbar angeordnet. Wenn der Wischhebel 54 im Gegenuhrzeiger geschwenkt wird (Figur 4) und an einem Schneewall 76 anläuft, erfolgt ein Verschwenken des Schwenkhebels 26 um dessen Gelenk 42 im Uhrzeigersinn (Pfeile 73), so daß das Gelenk 39 zwischen dem Lenker 36 und dem Schwenkhebel 26 gegen die Kraft der Zugfeder 52 auszuweichen vermag. Auf diese einfache Weise wird eine Blockierung der Wischvorrichtung vermieden. Wenn sich also beidseitig des Wischfeldes 64 im Bereich der Umkehrlagen 64 und 66 Schneewälle 70 und 76 angesammelt haben, so daß das Wischfeld 65 eingeengt wird, wird also einmal über den einen Schwenkhebel 24 das Gelenk 74 gegen Federkraft verstellen, während in der anderen Umkehrlage der andere Schwenkhebel 26 ein Ausweichen des Gelenks 39 zwischen dem Hebel 26 und dem Lenker 36 gegen die Kraft der Zugfeder 52 ermöglicht.

Bei der in Figur 5 dargestellten zweiten Ausführungsform sind die beiden Schwenkhebel 124 und 126 V-förmig ausgebildet. Dies hat den Vorteil, daß jeder der Schwenkhebel 124 bzw. 126 beispielsweise auf einem gemeinsamen Lagerzapfen 127 gelagert werden können. Bei dieser Ausführungsform der Erfindung bietet es sich an, die kreuzlenkerseitigen Hebelarme 128 bzw. 138, mit Hilfe der vorgespannten, gemeinsamen Zugfeder 52 an schubstangenfesten Anschlägen 144, 146 anzulegen. Die Lagerung der beiden V-förmigen Schwenkhebel 124, 126 kann dabei so ausgebildet sein, daß Lagerbuchsen der Schwenkhebel, in Rich- tung der Zapfenachse gesehen, hintereinander angeordnet sind. Da sich bei dieser Ausführungsform gemäß Figur 5 die anderen dargestellten Bauelemente nicht von den schon erläuterten Bauelementen unterscheiden, sind diese mit den schon beim ersten Ausführungsbeispiel vergebenen Bezugszahlen versehen worden.

## Patentansprüche

1. Vorrichtung zum Wischen von Scheiben an Kraftfahrzeugen, mit einem auf einer pendelnd angetriebenen Welle sitzenden Wischhebel, dessen Wischblatt mit einem Wischelement an der Scheibe angelegt ist, einem mit der Welle fest verbundenen Getriebeteil eines Gestänge-Pendelgetriebes, an dem mit Abstand voneinander die einen Enden von langgestreckten, sich in einander benachbarten Ebenen kreuzenden Lenkern angelenkt sind, deren anderen Enden gelenkig mit einem Endbereich einer Schubstange verbunden sind, welche mit ihrem anderen Ende mit einer umlaufenden Kurbel gelenkig verbunden ist, dadurch gekennzeichnet, daß zumindest eines der Lenkergelenke (29, 31, 37, 39) mittels Federkraft an einem Anschlag (44, 46 bzw. 144, 146) des mit diesem Lenker (30 bzw. 36) verbundenen Getriebeteils (32 bzw. 20) so angelegt ist, daß es bei einer das Wischfeld (64) einengenden Hemmung des Wischhebels (54) gegen die Federkraft auszuweichen vermag.

2. Vorrichtung nach Anspruch 1, dadurch gekennzeichnet, daß eines der Lenkergelenke (29, 31, 37, 39) eines jeden Lenkers (30, 36) gegen die Federkraft auszuweichen vermag.

3. Vorrichtung nach einem der Ansprüche 1 oder 2, dadurch gekennzeichnet, daß das einen Lenker (30, 36) mit der Schubstange (20) verbindende Gelenk (29, 39) gegen Federkraft auszuweichen vermag.

4. Vorrichtung nach einem der Ansprüche 1 bis 3, dadurch gekennzeichnet, daß zwischen jedem Lenker (30, 36) und der Schubstange (20) ein mit dieser gelenkig verbundener Schwenkhebel (24, 26 bzw. 124, 126) angeordnet ist, mit dessen einem Ende das jeweilige schubstangenseite Lenkergelenk (29, 39) verbunden ist und daß an beiden Schwenkhebeln (24, 26) ein gemeinsames, vorgespanntes Federelement (52) angreift und die Schwenkhebel (24, 26 bzw. 124, 126) an Anschlägen (44, 46 bzw. 144, 146) anlegt, welche an der Schubstange (20) angeordnet sind.

5. Vorrichtung nach Anspruch 4, dadurch gekennzeichnet, daß die Schwenkhebel (24, 26 bzw. 124, 126) als zweiarmige Hebel ausgebildet sind, an deren einem Hebelarm (28, 38) die mit den Lenkern (30, 36) zusammenarbeitenden Gelenke (29, 39) und das an deren anderem Hebelarm (48, 50) vorzugsweise ein einziges, gemeinsames Federelement (52) vorgespannt angreift und die Hebelarme an die Anschläge (44, 46) anlegt.

6. Vorrichtung nach Anspruch 5, dadurch gekennzeichnet, daß die Hebelarme (24, 26) mit Abstand voneinander mit der Schubstange (20) verbunden sind.

7. Vorrichtung nach Anspruch 5, dadurch gekennzeichnet, daß die Hebelarme (124, 126) an der Schubstange (20) eine gemeinsame Schwenkachse haben.
